# EUROPEAN PATENT APPLICATION

(11) **EP 4 289 659 A1**
(43) Date of publication of application: **13.12.2023**
(21) Application number: 23178278.0
(22) Date of filing: 08.06.2023
(51) Int. Cl.: B60L 53/80

(54) **ROBOT HAVING INTERCHANGEABLE BATTERIES**

(30) Priority: 08.06.2022 US 202263350142 P
(71) Applicant: Nimble Robotics, Inc., San Francisco, CA 94103 (US)
(72) Inventor: KALOUCHE, Simon, San Francisco, 94109 (US); SHEKELS, Matthew, Daly City, 94015 (US); KRUEMPELSTAEDTER, Kevin, Edina, 55439 (US); SHIMANOFF, Alexis, Santa Clara, 95051 (US)
(74) Representative: Gill Jennings & Every LLP

(57) **Abstract**

A robot with rechargeable and interchangeable batteries. The robot includes a body coupled to a wheel assembly, the wheel assembly including a plurality of wheels and a drive mechanism arranged to move the body along a first set of parallel rails extending in a first direction and a second set of parallel rails extending in a second direction perpendicular to the first direction. The body has a chassis defining a first battery compartment and a second battery compartments with a first battery module disposed within the first battery compartment. When the chassis engages with a charging station, the chassis is arranged to release the first battery module from the first battery compartment and receive a second battery module within the second battery compartment. The robot is thus designed to simultaneously swap a depleted first battery module with a charged second battery module and quickly return to operation.

## Description

### CROSS-REFERENCE TO RELATED APPLICATIONS

This application claims the benefit of the filing date of United States Provisional Patent Application No. 63/350,142 filed June 8, 2022, the disclosure of which is hereby incorporated herein by reference.

### BACKGROUND OF THE INVENTION

The present disclosure relates generally to robotic storage and retrieval systems, and more particularly, to a robot designed to swap rechargeable battery modules with a charging station.

Warehouses, or distribution fulfillment centers, require systems that enable the efficient storage and retrieval of many diverse products. Traditionally, inventory items are stored in containers and arranged on rows of shelving on either side of an aisle. Each container holds a plurality of items of one or more product types. The aisles provide access between the shelving for an operator or robot to migrate the aisles and retrieve the items. It is well understood that the aisles reduce the storage density of the system. In other words, the amount of space used for the storage of products (e.g., the shelving) is relatively small compared to the amount of space required for the storage system as a whole. As warehouse space is often scarce and expensive, alternative storage systems that maximize storage space are desired.

In one alternative approach, which offers a significant improvement in storage density, containers are stacked on top of one another and arranged in adjacent rows. That is, no aisle is provided between the adjacent rows of stacked containers. In turn, more inventory can be stored in a given space.

Various methods for retrieving inventory from the stacked containers have been contemplated. For example, U.S. Pat. Pub. No. 2021/0032034, incorporated by reference herein in its entirety, discloses a system in which containers are arranged in a plurality of stacks underneath a grid. Robots equipped with a picking arm and/or a lifting apparatus navigate the grid, extract containers when necessary, and then pick and pack the items into order containers.

The robots rely on one or more battery modules to power their various drive mechanisms. Battery modules, however, are a finite energy sources that eventually need to be recharged and/or replaced. While U.S. Pat. Pub. No. 2021/0032034 discloses various methods for recharging and/or replacing the battery modules of the robot, further improvements are desired to reduce the time-period in which the robots are inoperable (*e.g.,* not performing order fulfilment tasks).

### BRIEF SUMMARY OF THE INVENTION

In accordance with a first aspect of the present disclosure, a robot with a battery chassis having first and second battery compartments is provided. Among other advantages, the battery chassis is designed to release a first battery module from the first battery compartment and receive a second battery module within the second battery compartment. In this regard, the robot can simultaneously exchange the first (depleted) battery module with the second (charged) battery module to minimize inoperability of the robot.

In one aspect, a robot includes a body and a wheel assembly, a battery chassis coupled to the body and defining a first battery compartment and a second battery compartment, and a first battery module disposed within the first battery compartment, whereby when the chassis engages with a charging station, the chassis is arranged to release the first battery module from the first battery compartment and receive a second battery module within the second battery compartment.

The battery chassis may be disposed at least partially within the body and the first battery module may be accessible through an access opening defined in the body.

The first battery compartment may be located above the second battery compartment.

The first battery compartment may include a first rack arranged to receive the first battery, a first engagement arm provided with a pin and being pivotable between a natural position in which the first engagement arm extends in a direction transverse to a horizontal axis and a pivoted position, a first electrical contact configured to transmit a voltage from the first battery to a drive mechanism, and a first spring arranged to bias the first battery when the first battery is received by the first rack.

The first battery module may include a case defining a track configured to receive the pin, and the track may include a receiving section, a locking section, a first transition section between the receiving section and the locking section, a releasing section, and a second transition section between the locking section and the releasing section.

The wheel assembly may include a plurality of wheels and a drive mechanism arranged to move the body along a first set of parallel rails extending in a first direction and a second set of parallel rails extending in a second direction perpendicular to the first direction.

The robot may further include a container retrieval device including a hoist and/or a picking arm.

In another aspect, a system includes a storage structure and a robot. The storage structure includes pillars extending in a vertical direction and supporting a grid formed of a first set of rails extending in a first horizontal direction and a second set of rails extending in a second horizontal direction such that the grid defines a plurality of grid spaces; and a charging station disposed above the grid including a first charging terminal and a second charging terminal. The robot includes a body coupled to a wheel assembly including a plurality of wheels and a drive mechanism arranged to move the body along the first set of rails and along the second set of rails; and a chassis coupled to the body defining a first battery compartment and a second battery compartments, whereby, when the chassis and the charging station engage one another, the chassis is arranged to release a first battery module from the first battery compartment and receive a second battery module within the second battery compartment, and the charging station is arranged to receive first battery module within the first charging terminal and release the second battery module from the second charging terminal.

The first battery compartment may include a first rack arranged to receive the first battery, a first engagement arm having a first pin, and a first battery compartment spring arranged to engage the first battery when the first battery is disposed on the first rack, and the second battery compartment may include a second rack arranged to receive the second battery, a second engagement arm having a second pin, and a second battery compartment spring arranged to engage the second battery when the second battery is disposed on the second rack.

The first battery module may include a first electrode assembly surrounded by a first case, the first case defining a first track for releasably securing the first battery module to the first charging terminal and second track for releasably securing the first battery module to the first battery compartment.

The first and second tracks may define a receiving section, a locking section, a first transition section between the receiving section and the locking section, a releasing section, and a second transition section between the locking section and first releasing section.

The first battery module may be secured upon the first rack by a combination of the first battery compartment spring biasing the first battery module towards a terminal end of the first rack and the first pin positioned within the locking section of the second track.

The first track may be a mirror image of the second track.

The first charging terminal may include first guides forming a first shelf configured to receive the first battery module, a first charging contact, a first charging terminal spring, and a first securement arm having a first constraint, and the second charging terminal may include second guides forming a second shelf configured to receive the second battery module, a second charging contact, a second charging terminal spring, and a second securement arm having a second constraint.

The second battery compartment may be disposed underneath the first battery compartment.

In yet another aspect, a method includes engaging a robot with a charging station, removing a first battery module from a first battery compartment of the robot, and transferring a second battery module from the charging station to a second battery compartment of the robot, wherein the second battery compartment may be different than the first battery compartment.

The first battery module may be depleted, and the second battery module may be charged.

The removing step and the transferring may step occur simultaneously.

The method may further include transferring the first battery to a first charging terminal of the charging station.

The removing step may include breaking a mechanical, magnetic or electromagnetic connection between the first battery module and the first battery compartment.

### BRIEF DESCRIPTION OF THE DRAWINGS

FIG. 1A is a schematic perspective view of a storage frame for housing a plurality of stacked containers including a plurality of charging stations.
FIG. 1B is a top elevation view of a portion of the frame of FIG. 1A.
FIG. 2A is a perspective view of one of the charging stations of FIG. 1A including first and second charging terminals.
FIG. 2B is a side elevation view of the charging station of FIG. 2A housing a battery module within the first charging terminal.
FIGS. 3A and 3B are a perspective view and a side elevation view, respectively, of a robot having a battery chassis configured to be installed on top of the frame of FIG. 1A.
FIG. 4 is a perspective view of the battery chassis of FIGS. 3A and 3B housing a battery module within a second battery compartment of the battery chassis.
FIG. 5 is a perspective view of a battery module according to an embodiment of the present disclosure.
FIGS. 6A and 6B are side elevation views illustrating a process of transferring a depleted battery module from the second battery compartment of the battery chassis of FIGS. 3A and 3B to the second charging terminal of the charging station of FIGS. 2A and 2B and transferring a charged battery module from the first charging terminal of FIGS. 2A and 2B to the first battery compartment of the battery chassis of FIG. 3A and 3B.

### DETAILED DESCRIPTION

As used herein, when terms of orientation, for example, "vertical" and "horizontal" or relative terms such as, "above," "upwards," "beneath," "downwards" and the like are used to describe the orientation or relative position of specific features of the storage structure or mobile robot, the terms are in reference to the orientation or the relative position of the features in the normal gravitational frame of reference when the storage structure is positioned with a bottom of the storage structure resting on a surface. Also as used herein, the terms "substantially," "generally," "about" and the like are intended to mean that slight deviations from absolute are included within the scope of the term so modified.

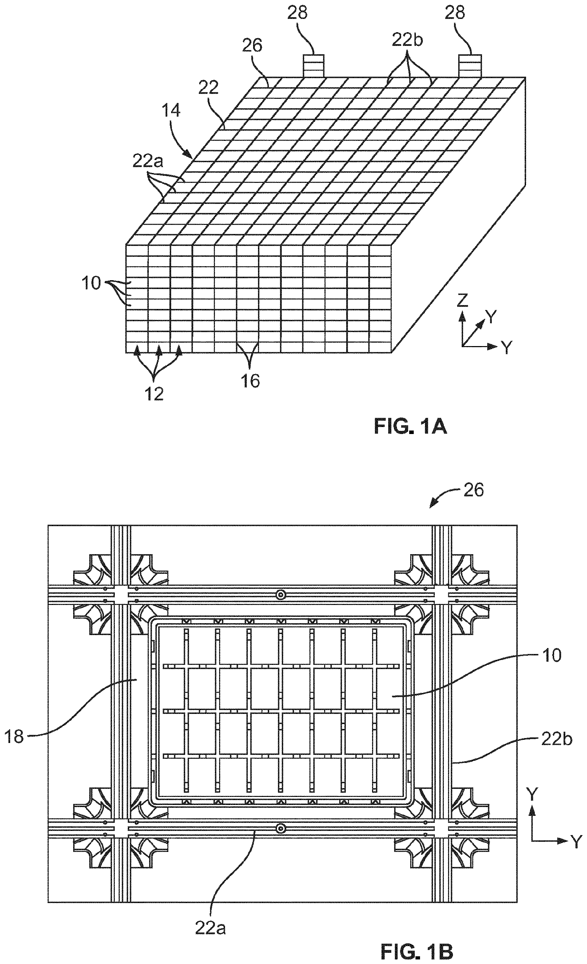

FIGS. 1A and 1B illustrate a storage structure for efficiently storing a plurality of stackable containers 10 according to an embodiment of the present disclosure. Each container 10 typically holds a plurality of product items (not shown) of identical or different product types. Containers 10 are designed to nest within an upper surface (*i.e.,* rim) of another container to form stacks 12 that can be arranged in a frame 14.

Frame 14 includes pillars 16 and a series of rails 22 arranged in a grid-like pattern at an uppermost level of the frame. For this reason, rails 22 are collectively referred to as a grid 26 having a plurality of "grid spaces." Pillars 16 form shafts within which stacks 12 are housed. As a result, each stack 12 is located within the footprint of a respective grid space (*e.g.,* longitudinally underneath the respective grid space). FIG. 1B is a top elevation view of a single grid space. As shown in FIG. 1B, the cross-sectional area of each shaft is slightly larger than the outer dimensions of containers 10 such that a small gap 18 of space exists between the outer surface of the containers and pillars 16.

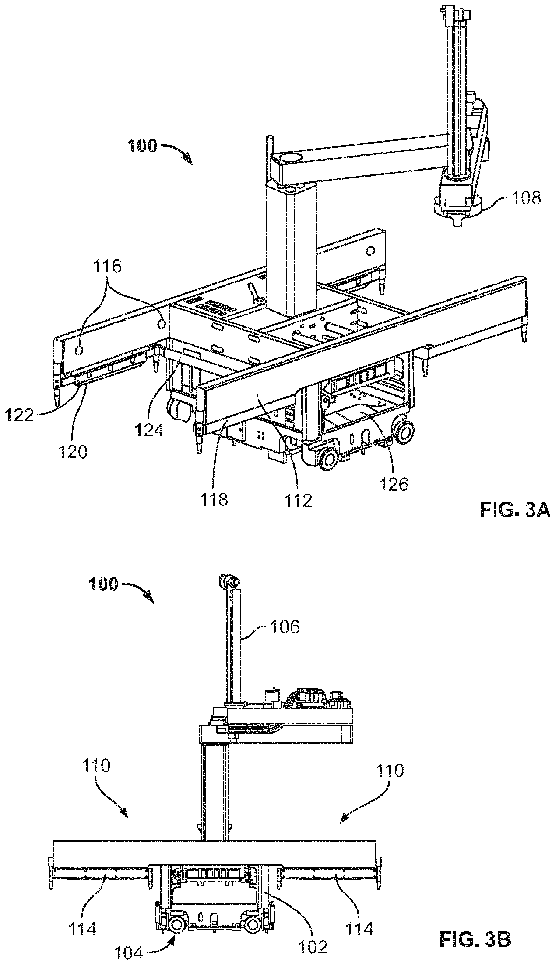

Each rail 22 may be extruded from a metal or metal alloy and formed with a double u-shaped track. The track provides a drive surface for robots 100 (shown in FIGS. 3A and 3B) to move about grid 26 while fulfilling orders. A first set of parallel rails 22*a* guides movement of robots 100 in a first direction (*e.g.,* the X-direction), and a second set of parallel rails 22*b*, arranged perpendicular to the first set of parallel rails, guides movement of the robots in a second direction (*e.g.,* the Y-direction). In this manner, rails 22 allow robot 100 to move laterally in two directions (in the X-direction and in the Y-direction) across the top of frame 14 such that the robots can be moved into position above any one of the stacks 12 of containers 10.

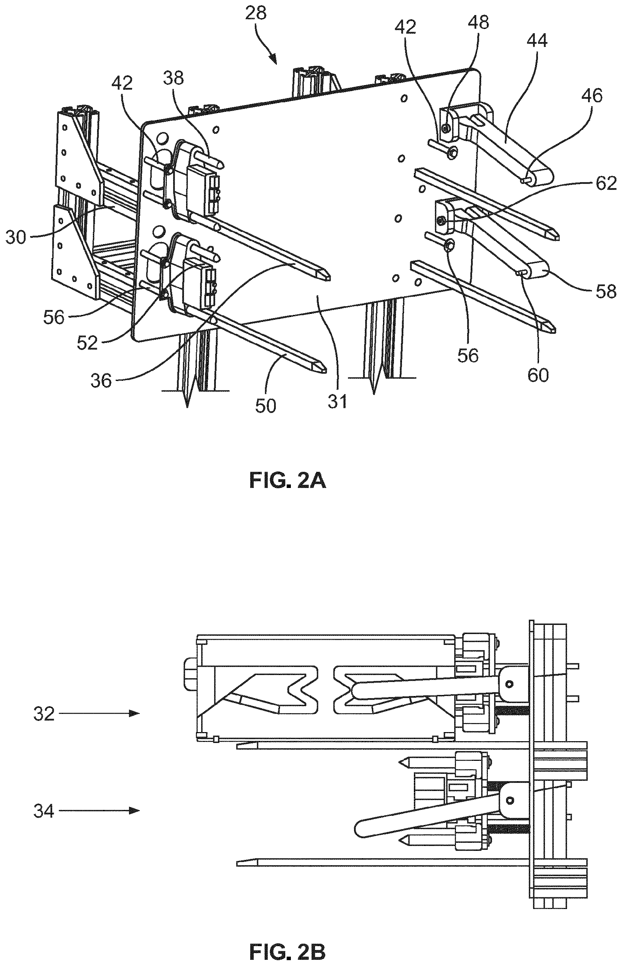

Frame 14 includes one or more charging stations 28 accessible to robots 100 installed on grid 26. Turning now to FIGS. 2A and 2B, each charging station 28 includes supports 30, a plate 31 connected to the supports, a first charging terminal 32 and a second charging terminal 34. Supports 30 may be coupled to frame 14, or another structure, such that first charging terminal 32 and second charging terminal 34 are elevated above rails 22 and accessible by robots 100. Although charging station 28 is illustrated in FIGS. 2A and 2B as having two charging terminals, the charging station can have two charging terminals or any number of charging terminals greater than two.

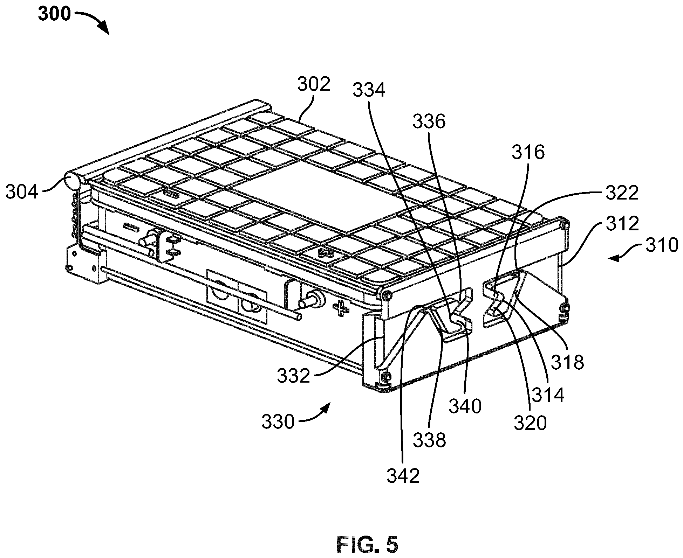

First charging terminal 32 includes first guides 36 defining a first shelf configured to support a battery module 300 (shown in FIG. 5), a first charging contact 38, first springs 42, and a first securement arm 44 having a first constraint 46. First guides 36 have a pointed terminal end that assists in aligning the battery chassis 200 of robot 100 (FIGS. 3A and 3B) and charging station 28. When battery module 300 is properly seated on the first shelf of first charging terminal 32, first charging contacts 38 are insertable into a socket of battery module 300 (shown in FIG. 5) and configured to charge the battery module. First securement arm 44 is attached to plate 31 and is pivotable about a first pivot point 48 between a natural position in which the first securement arm extends in a transverse direction to a horizontal axis and a pivoted position. For example, first securement arm 44 may have a natural position in which the terminal free end of the first engagement arm is pointed downwards and a pivoted position in which the free end of the first engagement arm extends horizontally or upwards. First springs 42 are connected to plate 31 and moveable between an extended position and a compressed position when compressed by battery module 300. As first springs 42 are compressed, battery module 300 moves relative to the first constraint 46 of first securement arm 44, thereby moving the first constraint along a first track 310 of the battery module to releasably secure the battery module to first charging terminal 32 as will be described in further detail hereinafter.

Second charging terminal 34 is disposed underneath first charging terminal 32 and is constructed similarly to the first charging terminal. That is, second charging terminal 34 includes second guides 50 forming a second shelf to support another battery module 300, a second charging contact 52, second springs 56, and a second securement arm 58 having a second constraint 60. Second guides 50 have a pointed terminal end that assists in aligning the battery chassis 200 of robot 100 (FIGS. 3A and 3B) and charging station 28. When battery module 300 is disposed on the second shelf, second charging contacts 52 are aligned with and insertable into a socket of the battery module 300 to charge the battery module. Second securement arm 58 is attached to plate 31 and is pivotable about a second pivot point 62 between a natural position in which the second securement arm extends in a transverse direction relative to a horizontal axis and a pivoted position. For example, second securement arm 58 may have a natural position in which the free end of the second engagement arm is pointed downwards and a pivoted position in which the free end of the first engagement arm extends horizontally or upwards. When first securement arm 44 and second securement arm 58 are in their respective natural positions, the first and second engagement arms may extend parallel to one another.

Second springs 56 are moveable between an extended position and a compressed position, for example, when compressed by a battery module 300. As second springs 56 are moved between the extended and compressed positions, battery module 300 moves relative to the second constraint 60 of second securement arm 58 which, in turn, causes the second constraint to move along the charging station track 310 of the battery module to releasably secure the battery module within the second charging terminal.

With continued reference to FIGS. 3A and 3B, robots 100 includes a communication interface to send and receive data between the robot and a remote computer enabling the remote computer to control movement and operation of each of the robots about grid 26. Robot 100 includes a vehicle body 102 and a wheel assembly 104 configured to guide movement of the vehicle body about rails 22. Wheel assembly 104 may include a plurality of wheels, a motor, one or more transmissions (belts or linkages) operably coupling each one of the wheels to the motor. The orientation of the wheels is controlled by the motor and the one or more transmissions. More specifically, the motor is coupled to each one of the wheels, via the one or more transmissions, such that rotation of the motor simultaneously pivots the orientation of each one of the wheels. In this regard, the wheels may be concurrently pivoted between a first orientation in which each of the wheels is aligned with the first set of parallel rails 22*a* and a second orientation in which each of the wheels is aligned with the second set of parallel rails *22b* (*e.g.,* 90 degrees). A drive mechanism is associated with wheel assembly 104 to rotate the wheels and move vehicle body 102 along rails 22 in which the wheels are positioned.

Robot 100 also includes a picking arm 106 equipped with an end effector 108 for picking and packing inventory item and/or a container retrieval device 110. Picking arm 106 is movable in at least three dimensions to allow end effector 108 to pick an inventory item from a storage container (*e.g.,* containers storing inventory items) and pack the picked inventory items into an order container (*e.g.,* containers into which the picked items are packed). End effector 108 may be pneumatically actuated, for example, a suction cup.

As shown in FIGS. 3A and 3B, robot 100 includes two container retrieval devices 110: a first container retrieval device attached to a front of vehicle body 102 and a second container retrieval device attached to a back of the vehicle body. However, it is contemplated that robot 100 may include zero, one, two, three or four container retrieval devices 110 and the container retrieval devices may be attached to the sides of vehicle body 102 in any arrangement.

Each container retrieval device 110 includes a pair of support arms 112 and a hoist 114 designed to extract storage containers from frame 14 and/or secure order containers to the vehicle body 102 of robot 100. Hoist 114 is suspended from support arms 112 by cables (not shown) which are connected to a winding mechanism 116 such as a spool, hoist, or winch. The cables can thus be wound and unwound to adjust the height of hoist 114 with respect to the support arms in the z-direction.

Hoist 114 includes a three-sided grapple 118 and pivotable flaps 120. The three sides of grapple 118 are formed by opposing grapple arms 122 and a connector 124. Grapple arms 122 and connector 124 collectively define an aperture. Each flap 120 is pivotable relative to a respective grapple arm 122 between a deployed configuration in which the flap extends away from the grapple arm and into the aperture and an undeployed configuration in which the flap lies substantially flush against the grapple arm. Movement of flaps 120 between the undeployed and deployed configurations may be controlled by an actuator disposed within hoist 114 and configured to convert an electrical signal carried through the cables to rotational motion of the flaps. When flaps 120 are in the undeployed configuration, the aperture is larger than containers 10, allowing hoist 114 to be lowered into gap 18, and around a stack 12 of containers 10, before the flaps are deployed and brought into engagement with an engagement feature such as a rib (not shown) on a side of the container. In this manner, container retrieval device 110 is arranged to extract one or more containers 10 in a single lift.

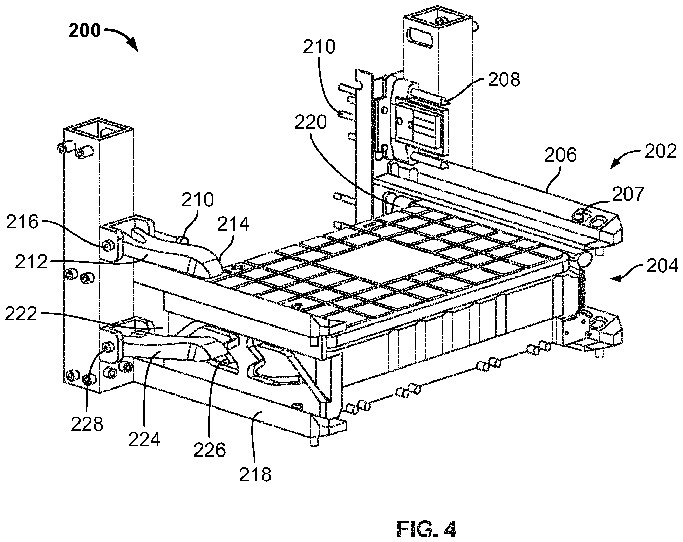

With additional reference to FIG. 4, the vehicle body 102 of robot 100 defines a cavity in which a battery chassis 200 is housed. Battery chassis 200 includes a frame defining a first battery compartment 202 and a second battery compartment 204 accessible through an access opening 126 in the vehicle body 102 of robot 100. The access opening 126 may be a permanent opening formed through a lateral side of vehicle body 102 or an openable and closable section of the vehicle body.

The dual compartment battery chassis 200 is arranged to autonomously transfer a depleted battery module to a charging station 28 and simultaneously receive a charged battery module from the charging station. The charged battery module may be utilized immediately to power the various drive mechanisms of robot 100 such as wheel assembly 104, picking arm 106, and/or hoist 114. It will be appreciated that the "simultaneous swapping" of the depleted battery module for a charged battery module reduces the time in which robots 100 are inoperable.

With continued reference to FIG. 4, the first battery compartment 202 includes first brackets 206 defining a first rack configured to support battery module 300, first electrical contacts 208, first springs 210 arranged to bias the battery module, and a first engagement arm 212 having a first pin 214. First brackets 206 may be generally L-shaped and form a seat for battery module 300. The L-shaped first brackets 206 create a small space between first battery compartment 202 and second battery compartment 204 through which the first guides 36 of first charging terminal 32 may extend, thereby allowing a battery module 300 to be transferred from the first charging terminal to the first battery compartment and vice-versa. Each of the L-shaped first brackets 206 include a bearing 207 designed to rotate in a horizontal plane to reduce friction as the battery module 300 is slid along the first brackets and into or out from first battery compartment 202.

When battery module 300 is seated on first brackets 206, first electrical contacts 208 are aligned with and insertable into the socket of battery module 300 to transmit power from the battery module to the various drive mechanisms of robot 100. First engagement arm 212 is attached to the frame and is pivotable about a first pivot point 216 between a natural position in which the first engagement arm extends in a transverse direction to a horizontal axis and a pivoted position. For example, first engagement arm 212 may have a natural position in which the terminal free end of the first engagement arm is pointed downwards and a pivoted position in which the free end of the first engagement arm extends horizontally or upwards.

First springs 210 are arranged to bias battery module 300 toward the terminal ends of first brackets 206 such that the battery module moves relative to the first pin 214 of first engagement arm 212 when the spring is compressed and expanded. The relative movement of battery module 300 causes first pin 214 to move along a battery chassis track 330 of the battery module to releasably secure the battery module within the first battery compartment 202 of battery chassis 200.

Second battery compartment 204 is disposed underneath first battery compartment 202 and is constructed similarly to the first battery compartment. That is, second battery compartment 204 includes second brackets 218 defining a second rack configured to support battery module 300, second electrical contacts 220, second springs 222, and a second engagement arm 224 having a second pin 226. Second brackets 218 may also be generally L-shaped, form a seat for battery module 300, and include a bearing designed to reduce friction as the battery module 300 is slid into or out from second battery compartment 204.

When battery module 300 is properly seated on second brackets 218, second electrical contacts 220 are aligned with and insertable into a socket of battery module 300 to transmit power from the battery module to the various drive mechanisms of robot 100. Second engagement arm 224 is attached to the frame and is pivotable about a second pivot point 228 between a natural position in which the second engagement arm extends in a transverse direction to a horizontal axis and a pivoted position. In one example, second engagement arm 224 may have a natural position in which the free end of the second engagement arm is pointed downwards and a pivoted position in which the terminal free end of the second engagement arm extends horizontally or upwards. When first engagement arm 212 and second engagement arm 224 are in their respective natural positions, the first and second engagement arms may extend parallel to one another. Second springs 222 are arranged to bias battery module 300 toward the terminal ends of second brackets 218 such that the battery module moves relative to second pin 226 when the second spring is expanded and compressed. As a result, second pin 226 moves along the battery chassis track 330 of battery module 300 to releasably secure the battery module within the second battery compartment 204 of battery chassis 200.

Referring to FIG. 5, battery module 300 is a secondary (*e.g.,* rechargeable) battery. For example, battery module 300 may be a Lithium-ion secondary battery and include an electrode assembly (not shown) and a casing 302. The electrode assembly may have a stacked, wound, or folded assembly. When the electrodes are stacked, the electrode assembly is formed by alternatively stacking positive electrodes (anodes) and negative electrodes (cathodes) with separators disposed therebetween. The casing 302 defines sockets 304 configured to receive the first or second charging contacts of charging station 28 to recharge battery module 300 and to receive the first and second electrical contacts of battery chassis 200 to transfer power from the battery module to the various drive mechanisms of robot 100.

A lateral side of battery module 300 defines a first track 310 for releasably securing the battery module to charging station 28 and a second track 330 for releasably securing the battery module to battery chassis 200. For this reason, first track 310 may be referred to herein as the "charging station track" and second track 330 may be referred as the "battery chassis track." Charging station track 310 and battery chassis track 330 are mirror images of one another about a longitudinal axis defined between the tracks.

Charging station track 310 defines a receiving section 312, a locking section 314, a first transition section 316 between the receiving section and the locking section, a releasing section 318, and a second transition section 320 between the locking section and the releasing section. Receiving section 312 preferably has a widened mouth at a front of battery module 300, an upwardly angled portion, and a horizontal portion. The upwardly angled portion is designed to pivot first securement arm 44 or second securement arm 58 from their respective natural positions to their pivoted positions as first constraint 46 or second constraint 60 is moved along the upwardly angled portion of the receiving section. The first transition section 316 is angled downwards and towards the front of battery module 300 between an end of the horizontal portion of receiving section 312 and locking section 314. The second transition section 320 is angled downwards and towards the rear of battery module 300 between locking section 314 and a beginning of releasing section 318. The releasing section 318 has a horizontal portion and an angled portion that terminates at a gap 322 formed at a junction between the releasing section and receiving section 312. In some embodiments, a small horizontal ledge may be disposed within gap 322 to prevent the first and second constraints from inadvertently passing into the gap while travelling along receiving section 312 while allowing the constraints to transition from the releasing section to the receiving section.

Battery chassis track 330 is constructed as a mirror image of charging station track 310 and is designed to releasably secure the battery module to the battery chassis 200 of robot 100. More particularly, battery chassis track 330 defines a receiving section 332, a locking section 334, a first transition section 336 between the receiving section and the locking section, a releasing section 338, and a second transition section 340 between the locking section and the releasing section. Receiving section 332 preferably has a widened mouth at a rear of battery module 300, an upwardly angled portion, and a horizontal portion. The upwardly angled portion is designed to pivot first engagement arm 212 or second engagement arm 224 from their respective natural positions to their pivoted positions as first pin 214 or second pin 226 is moved along the upwardly angled portion of the receiving section. The first transition section 336 is angled downwards and towards the rear of battery module 300 between an end of the horizontal portion of receiving section 332 and locking section 334. The second transition section 340 is angled downwards and towards the front of battery module 300 between locking section 334 and a beginning of releasing section 338. The releasing section 318 has a horizontal portion and an angled portion that terminates at a gap 342 formed at a junction between the releasing section and receiving section 332. In some embodiments, a small horizontal ledge may also be disposed within gap 342 to prevent the first and second pins from inadvertently passing into the gap while travelling along receiving section 332.

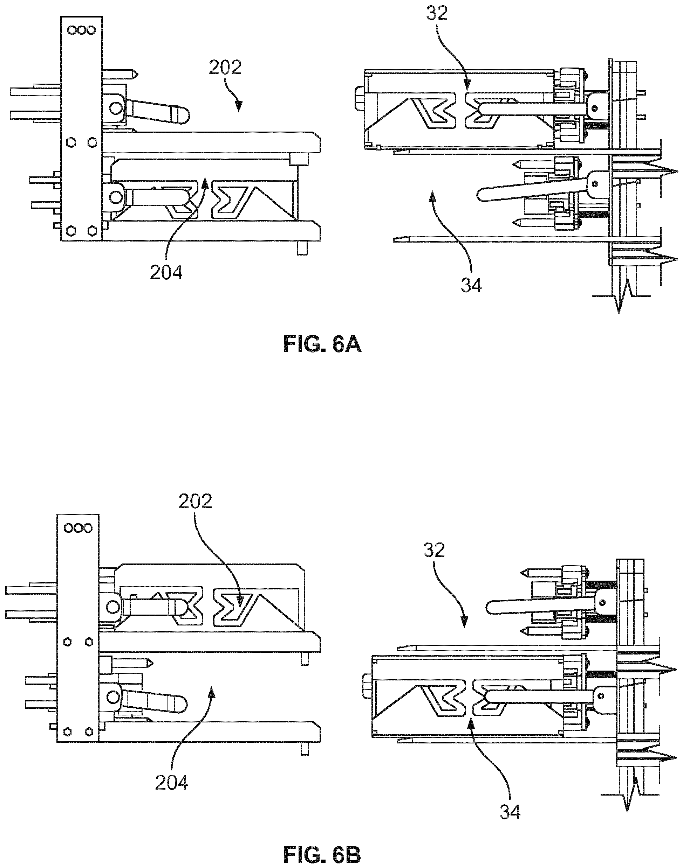

A method of swapping a depleted battery module 300 from the battery chassis 200 of robot 100 to charging station 28 and a charged battery module from the charging station to the battery chassis of the robot will now be described with reference to FIGS. 6A and 6B. As used herein, the term "depleted battery module" means a battery module that is not fully charged and the term "charged battery module" means a battery module that has at least some charge.

Robot 100 may have a battery module 300 in either the first battery compartment 202 or the second battery compartment 204 of battery chassis 200. As shown in FIG. 6A, the battery module 300 is disposed within the second battery compartment 204 of battery chassis 200. Battery module 300 is secured within the second battery compartment 204 by a combination of the second springs 222 biasing the battery module toward the terminal ends of second brackets 218 and the second pin 226 being positioned within the locking section 334 of the battery chassis track 330. Put differently, the opposing forces provided by second springs 222 and the second pin 226 being positioned within the locking section 334 of the battery chassis track 330, secure the battery module on the second brackets 218.

When robot 100 detects that battery module 300 is depleted, the remote processor will instruct the robot to engage a charging station 28 having a charged battery module within the first charging terminal 32 of the charging station as shown in FIG. 6A. Charged battery module 300 is secured within the first charging terminal 32 of charging station 28 by opposing forces provided by first springs 42 biasing the charged battery module toward the terminal ends of first guides 36, and the first constraint 46 of first securement arm 44 being positioned within the locking section 314 of the charging station track 310.

Upon receiving the swap instructions from the remote processor, the wheel assembly 104 of robot 100 navigates the vehicle body 102 of robot 100 about rails 22 and into engagement with the identified charging station 28. As the battery chassis of 200 of robot 100 is brought into engagement with the charging station 28, the first guides 36 of first charging terminal 32 will be inserted between the first battery compartment 202 and second battery compartment 204 and the second guides 50 of second charging terminal 34 will be positioned below the depleted battery module 300 housed within second battery compartment 204. In addition, the charged battery module 300 will slide onto the terminal ends of first brackets 206. As the battery chassis 200 of robot 100 moves further towards the plate 31 of charging station 28, the charged battery module 300 will slide along bearing 207 and be guided by the L-shaped first brackets 206 into alignment with the first pin 214 of first engagement arm 212. As a result, first pin 214 will enter the widened mouth of the battery chassis track 330 of the charged battery module. At the same time, the second constraint 60 of second securement arm 58 will be positioned within the widened mouth of the charging station track 310 of the depleted battery module.

Further movement of the battery chassis 200 of robot 100 towards charging station 28, will cause the first pin 214 of first engagement arm 212 to ride along the upwardly sloped portion of the receiving section 332 of battery chassis track 330, across the ledge disposed in gap 342, along the horizontal portion and to the junction of the horizontal portion and first transition section 336. In this position, the charged battery module 300 engages the first spring 210 of first battery compartment 202. At the same time, the second constraint 60 of second securement arm 58 will ride along the upwardly sloped portion of the receiving section 312 of charging station track 310, across the ledge disposed in gap 322, along the horizontal portion and to the junction of the horizontal portion and first transition section 316. In this position, the depleted battery module 300 contacts the second springs 56 of second charging terminal 34.

Robot 100 may then be moved even further towards charging station 28, causing each of the springs to compress. As the first springs 210 of first battery compartment 202 compress, the first pin 214 of first engagement arm 212 will pivot from the pivoted position toward the natural position and slide along the first transition section 336 into the locking section 334 to secure the charged battery module in the first battery compartment 202. As the first springs 42 of the first charging terminal 32 compress, first securement arm 44 will pivot to the natural position and the first constraint 46 of the first securement arm will move along the second transition section 320 and into the releasing section 318 of the charging station track.

Similarly, compression of the second springs 222 of second battery compartment 204 will dislodge the second pin 226 from the locking section 334 of battery chassis track 330. After the second pin 226 is dislodged from locking section 334, the second pin will slide along the second transition section 340 as second engagement arm 224 transitions from the pivoted position toward the natural position. At the same time, when the second springs 56 of second charging terminal 34 compress, the second constraint 60 of second securement arm 58 will pivot from the pivoted position toward the natural position and slide along the first transition section 316 and into the locking section 314 of the charging station track to secure the depleted battery module 300 in the second charging terminal 34.

Robot 100 may then drive away from charging station 28. As the battery chassis of robot 100 moves away from charging station 28, the first constraint 46 of first securement arm 44 rides along the upwardly angled slope of releasing section 318, through gap 342 and into the widened mouth to disengage the charged battery module 300 from the first charging terminal. Likewise, the second pin 226 of second engagement arm 224 rides along the upwardly angled slope of releasing section 338, through gap 342 and into the widened mouth to release the depleted battery module 300 from the second battery compartment. As shown in FIG. 6B, the first electrical contacts 208 of first battery compartment 202 are positioned within the socket 304 of charged battery module, thereby allowing the battery module to power the various drive mechanisms of the robot, and the second charging contacts 52 are disposed within the socket of depleted battery module, thereby allowing charging station 28 to recharge the depleted battery.

The mechanisms disclosed herein thus allow a depleted battery module to be transferred from a robot to a charging station, and a charged battery to be transferred from a charging station to a robot simultaneously, thereby avoiding the need for the robot to first release a depleted battery module and drive to a new location before receiving a charged battery module. As a result, the battery swap mechanism disclosed herein minimize the time in which the robot is inoperable (e.g., not performing order fulfilment tasks).

It will be appreciated that the battery swap mechanisms described herein are merely illustrative examples. For example, the tracks may be formed with differently structured pathways, or the battery modules may be released and secured within respective battery compartments of the robot and charging terminals of the charging station using any alternatively known mechanical, magnetic or electrical mechanism to releasably secure items. Furthermore, the battery swap mechanisms are not limited to robots and may be used in any battery powered device such as, but not limited to, cars and other automobiles.

Although the invention herein has been described with reference to particular embodiments, it is to be understood that these embodiments are merely illustrative of the principles and applications of the present invention. It is therefore to be understood that numerous modifications may be made to the illustrative embodiments and that other arrangements may be devised without departing from the spirit and scope of the present invention as defined by the appended claims.

## Claims

1. A robot, comprising:
a body and a wheel assembly;
a battery chassis coupled to the body and defining a first battery compartment and a second battery compartment; and
a first battery module disposed within the first battery compartment,
wherein when the battery chassis engages with a charging station, the chassis is arranged to release the first battery module from the first battery compartment and receive a second battery module within the second battery compartment.

2. The robot of claim 1, wherein the battery chassis is disposed at least partially within the body and the first battery module is accessible through an access opening defined in the body.

3. The robot of claim 1 or 2, wherein the first battery compartment is located above the second battery compartment.

4. The robot of any preceding claim, wherein the first battery compartment comprises:
a first rack arranged to receive the first battery module;
a first engagement arm with a pin, the first engagement arm being pivotable between a natural position in which the first engagement arm extends in a direction transverse to a horizontal axis and a pivoted position;
a first electrical contact configured to transmit a voltage from the first battery to a drive mechanism; and
a first spring arranged to bias the first battery when the first battery is received by the first rack.

5. The robot of claim 4, wherein the first battery module comprises a case defining a track configured to receive the pin, and wherein the track includes a receiving section, a locking section, a first transition section between the receiving section and the locking section, a releasing section, and a second transition section between the locking section and the releasing section.

6. The robot of any preceding claim, wherein the wheel assembly includes a plurality of wheels and a drive mechanism arranged to move the body along a first set of parallel rails extending in a first direction and a second set of parallel rails extending in a second direction perpendicular to the first direction.

7. The robot of any preceding claim, further comprising:
a container retrieval device including a hoist; and/or
a picking arm.

8. A system, comprising:
the robot of claim 1; and
a storage structure, comprising:
pillars extending in a vertical direction, the pillars supporting a grid formed of a first set of rails extending in a first horizontal direction and a second set of rails extending in a second horizontal direction, the grid defining a plurality of grid spaces; and
a charging station disposed above the grid, the charging station including a first charging terminal and a second charging terminal..

9. The system of claim 8, wherein,
the first battery compartment includes a first rack arranged to receive the first battery, a first engagement arm having a first pin, and a first battery compartment spring arranged to engage the first battery when the first battery is disposed on the first rack, and wherein,
the second battery compartment includes a second rack arranged to receive the second battery module, a second engagement arm having a second pin, and a second battery compartment spring arranged to engage the second battery when the second battery is disposed on the second rack.

10. The system of claim 9, further comprising:
the first battery module, the first battery module including a first electrode assembly surrounded by a first case, the first case defining a charging station track for releasably securing the first battery module to the first charging terminal and a battery chassis track for releasably securing the first battery module to the first battery compartment.

11. The system of claim 10, wherein each of the charging station track and battery chassis track define a receiving section, a locking section, a first transition section between the receiving section and the locking section, a releasing section, and a second transition section between the locking section and first releasing section.

12. The system of claim 11, wherein the first battery module is secured upon the first rack by a combination of the first battery compartment spring biasing the first battery module towards a terminal end of the first rack and the first pin positioned within the locking section of the battery chassis track.

13. The system of claims 10 to 12, wherein the charging station track is a mirror image of the battery chassis track.

14. The system of claims 8 to 13, wherein,
the first charging terminal, comprises:
first guides forming a first shelf configured to receive the first battery module, a first charging contact, a first charging terminal spring, and a first securement arm having a first constraint, and wherein,
the second charging terminal, comprises:
second guides forming a second shelf configured to receive the second battery module, a second charging contact, a second charging terminal spring, and a second securement arm having a second constraint.

15. The system of claims 8 to 14, wherein the second battery compartment is disposed underneath the first battery compartment.
